# EUROPEAN PATENT SPECIFICATION

(11) **EP 0 848 674 B1**
(45) Date of publication and mention of the grant of the patent: **02.06.1999**
(21) Application number: 96928596.4
(22) Date of filing: 29.08.1996
(51) Int. Cl.: B60R 21/04

(54) **TRIM PANEL WITH FRANGIBLE FIXING MEANS**
VERKLEIDUNGSTEIL MIT ABBRECHBAREN BEFESTIGUNGSMITTELN
PANNEAUX DE GARNISSAGE A MOYENS DE FIXATION CASSANTS

(30) Priority: 06.09.1995 GB 9518123
(43) Date of publication of application: 24.06.1998
(73) Proprietor: ROVER GROUP LIMITED, Warwick, Warwickshire CV34 6RG (GB)
(72) Inventor: ROACH, Alan, Solihull West Midlands B90 2DP (GB); MONAGHAN, Michael, Thomas, Hall Green Birmingham B28 8EH (GB)
(74) Representative: Parnham, Kevin
(86) International application number: GB9602110
(87) International publication number: WO9709203

(56) References cited:
- DE-A- 3 925 821
- DE-A- 4 329 406
- DE-A-19 505 935
- US-A- 3 779 595
- US-A- 3 984 128
- US-A- 5 037 130

## Description

This invention relates to a fixing for trim used to enhance the visual appearance of a vehicle. More specifically, the invention relates to plastic trimming used to cover the interior surface of parts of the body structure of the vehicle.

It is known from DE-A-4329406 to provide plastic trim comprising a channel-form component having a substantially flat main portion with lateral components inclined thereto which taper towards the interior surface of the vehicle body. This type of trim is connected to a mounting on a vehicle body panel using a fixing which is rigidly attached to the main portion of the trim. The fixing comprises a rigid component having an end flange which passes through an aperture in the body panel mounting and is held therein using a spring clip.

Known fixings are made of a rigid but resilient material such as polypropylene plastic which are strong in compression. Accordingly, under impact conditions known trim fixings do not yield or provide significant energy absorption.

The present invention seeks to avoid or at least mitigate the problem of the prior art.

According to the invention there is provided a plastic trim panel for attachment to part of the interior structure of a vehicle, the trim panel including a plate like portion for overlying the structural part to be covered and a number of spaced apart trim fixings for attaching the plate like portion to the structural part of the vehicle, each trim fixing comprising of a plastic mounting member and a fixing means for cooperation, in use, with a mounting means associated with the structural part of the vehicle characterised in that each of said mounting members has a frangible portion adapted to shear under a predetermined applied impact force thereby to absorb energy from the impact force.

The frangible portion of each of the mounting members extends substantially parallel to the trim panel to be attached.

Each of the mounting members may have two leg portions each having an upper leg portion and a lower leg portion connected together by the frangible portion so as to form a discontinuity therebetween.

Each frangible portion may be thinner than the adjoining upper and lower leg portions to which it is connected.

The frangible portion may have a recess therein to act as a failure initiator.

The upper leg portions and the fixing means may be formed as a single integral part.

The or each lower leg member may be attached to the trim panel by welding or adhesive bonding.

The mounting member and the fixing means may be formed as an integral part of the trim panel.

Each mounting member may be formed by a lower cylindrical portion and an upper cylindrical portion connected by an annular flange forming said frangible portion.

The annular flange may be thinner than the adjoining upper and lower cylindrical portions that it connects.

The annular flange may have a circumferentially extending recess therein.

The annular flange may form a discontinuity between said upper and lower cylindrical portions.

Advantageously, one or more blocks of resilient foam may be interposed between the plate like portion of the trim panel and the structural part of the vehicle body to absorb energy during failure of the mounting members.

The invention will now be described by way of example with reference to the accompanying drawing in which:
Fig.1 is a cross-section through a trim panel according to the invention attached to part of the body structure of a vehicle showing a first embodiment of a trim fixing;
Fig.2 is a cross-section through a second embodiment of a trim fixing according to the invention;
Fig.3 is a side elevation view of the trim fixing shown in Fig.2;
Fig.4 is a cross-section through a third embodiment of a trim fixing according to the invention; and
Fig.5 is a perspective view of the trim fixing shown in Fig.4.

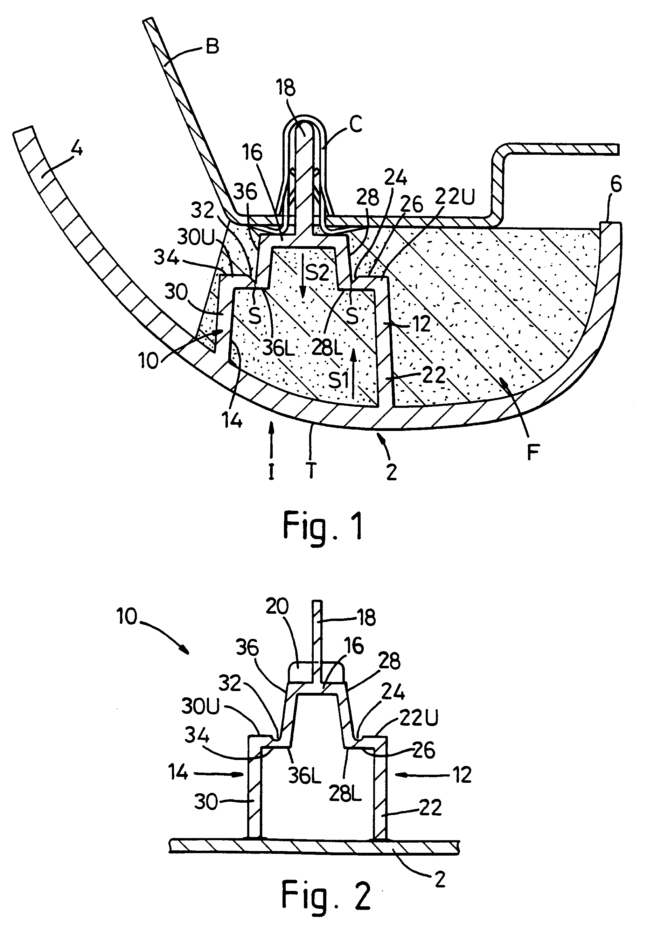

Referring to figure 1, there is shown a trim fixing 10 attached to a trim panel T. The trim panel, comprising a plate like structure having a main panel portion 2 and lateral panel portions 4 and 6.

The trim fixing 10 is integrally moulded as part of trim panel T which is made from a resilient plastic material such as polypropylene.

The trim fixing comprises of a mounting member 10 having a first leg 12 and second leg 14 which meet at an upper joining portion 16 and extending upwardly from portion 16 a fixing means in the form of a flange 18. The trim fixing 10 and the flange 18 are formed as an integral part of the trim panel T by being co-moulded therewith.

The legs 12 and 14 each comprise of three portions.

The leg 12 has a lower leg portion 22 which is joined to trim moulding panel portion 2, an upper leg portion 28 which is joined to the upper joining portion 16 and a cross member 26.

At the inner end of the cross member 26 there is a recess in the form of a groove 24. The groove 24 reduces the thickness of the cross member 26 and acts as a failure initiator during use.

The cross member 26 bridges a discontinuity between the upper and lower portion 28, 22 of the leg 12 and extends between a position near the upper end 22U of the leg portion 22 to a lower end 28L of the upper leg portion 28.

This discontinuity ensures that during failure of the frangible portion formed by the cross member 26 it is not possible for pure compressive loads to be transmitted from the upper portion 28 to the lower portion 22 of the leg 12 which would otherwise compromise the energy absorbing properties and the predictability of failure of the trim fixing.

The cross member 26 is thinner than either of the lower and upper portions 22 and 28 and is designed to fail when a pre-determined shear load is applied, but prior to actual failure the cross member 26 undergoes plastic deformation in which energy is absorbed. The presence of the groove 24 ensures a more uniform failure mode by acting as a failure initiator.

The leg 14 has a lower leg portion 30 which is joined to the main panel portion 2, an upper leg portion 36 which is joined to the upper joining portion 16 and a cross member 34.

At the inner end of the cross member 34 there is a recess in the form of a groove 32. The groove 32 reduces the thickness of the cross member 34 and acts as a failure initiator during use.

The cross member 34 bridges a discontinuity between the upper and lower portion 36, 30 of the leg 14 and extends between a position near the upper end 30U of the leg portion 30 to a lower end 36L of the upper leg portion 36.

This discontinuity ensures that during failure of the frangible portion formed by the cross member 34 it is not possible for pure compressive loads to be transmitted from the upper portion 36 to the lower portion 30 of the leg 14 which would otherwise compromise the energy absorbing properties and predictability of failure of the trim fixing.

The cross member 34 is thinner than either of the lower and upper portions 30 and 36 and is designed to fail when a pre-determined shear load is applied, but prior to actual failure the cross member 34 undergoes plastic deformation in which energy is absorbed. The presence of the groove 32 ensures a more uniform failure mode by acting as a failure initiator

The cross member 34 is thinner than either of the lower and upper portions 30 and 36 and is designed to fail when a predetermined load is applied, but prior to actual failure undergoes plastic deformation in which energy is absorbed.

In use a mounting means in the form of a spring clip C is used to grip the fixing flange 18 within an aperture in a mounting aperture on a body panel B of a vehicle. The resilience of the spring clip C inhibits withdrawal of the flange 18 from the aperture.

In the event of a body part impacting against the panel portion 2, the fixing 10 is designed to deform and then break at cross members 26 and 34 thereby to provide energy absorption when an impact force I.

The impact force I urges movement of the leg portions 22 and 30 towards the body panel B thus effecting a shear force S1 along their length which force is resisted by leg members 28 and 36 respectively, as indicated by arrow S2. The relative motion of leg members 22 and 28, and 30 and 36, effects a plastic deformation and ultimately a shearing at cross members 26 and 34 respectively. If the force I is sufficiently great, then a shear fracture S will result in cross members 26 and 34 causing trim panel 2 to move closer to the body panel B. This movement of the trim panel 2 towards the body panel B causes a resilient foam block F which is interposed therebetween to be compressed thereby absorbing more energy.

Advantageously, since a pre-determined and effective weakness 24, 32 is provided in trim fixing 10 at points 26 and 34, both the required magnitude of impact force to break the points of weakness and the position at which breakage occurs are controllable. For example the thickness of cross members 26 and 34 can be adapted to break under a pre-determined impact force.

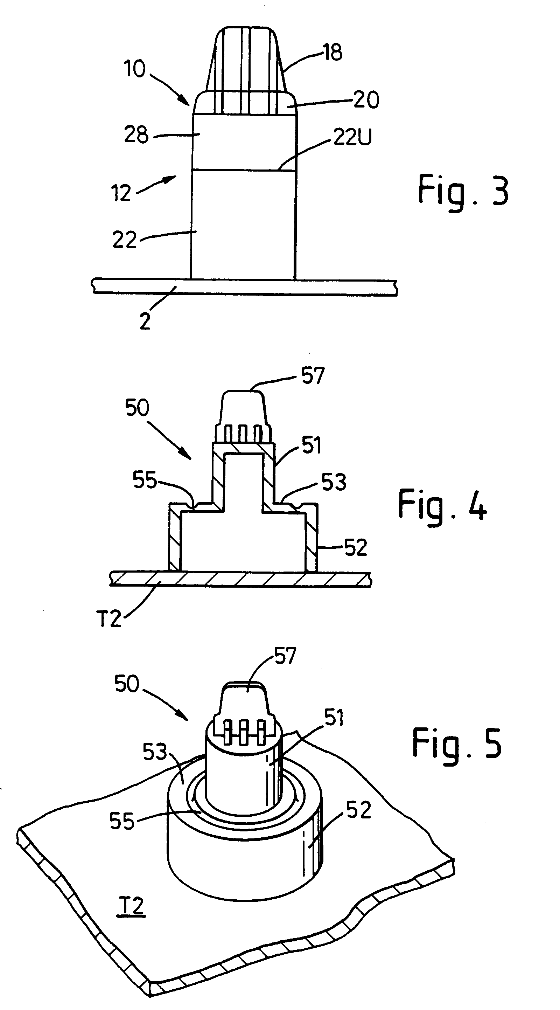

With reference to figures 2 and 3 there is shown a trim fixing which in most respects is the same as that previously described and for which the same reference numerals are used but in which the trim fixing and the trim panel are made separately and then joined by adhesive bonding or welding instead of being formed as an integral part of the trim panel..

Such a construction is useful if the material from which the main trim panel is made is not suitable for the manufacture of the mounting member.

With reference to figures 4 and 5 there is shown a trim fixing that in many respects is similar to that shown and described with reference to figures 1 to 3.

In this case the mounting member 50 is formed by an upper cylindrical portion 51 and a lower cylindrical portion 52 joined together by an annular flange 53.

The annular flange 53 forms a frangible portion that is sheared during collapse of the trim fixing. The annular flange is of a thinner section than the upper and lower 51, and 52 portions and has a circumferentially extending recess 55 therein to act as a failure initiator.

At the upper end of the upper portion 51 there is integrally formed a fixing means in the form of a flange 57 which, in use, co-operates with a spring clip used to fasten the trim fixing 50 to part of the body structure.

Each of the trim fixings 50 is attached to the trim panel T2 by spin welding.

It will be appreciated by the man skilled in the art that each trim panel would have several such trim fixing means spaced out along its length.

## Claims

1. A plastic trim panel for attachment to part of the interior structure of a vehicle, the trim panel (T) including a plate like portion (2) for overlying the structural part (B) to be covered and a number of spaced apart trim fixings for attaching the plate like portion (2) to the structural part (B) of the vehicle, each of the trim fixings comprising of one or more plastic mounting members (10, 50) and a fixing means (18, 57) for cooperation, in use, with a mounting means associated with the structural part (B) of the vehicle characterised in that each of said mounting members (10, 50) has a frangible portion (24,34,53) therein adapted to shear under a predetermined applied impact force (I) thereby to absorb energy from the impact force (I).

2. A trim panel as claimed in Claim 1 in which each of the mounting members (10,50) has two leg portions (12, 14) each having an upper leg portion (28,36) and a lower leg portion (24,30) connected together by the frangible portion (24,34) so as to form a discontinuity therebetween.

3. A trim panel as claimed in Claim 2 in which each frangible portion (24,34) is thinner than the adjoining upper and lower leg portions (28,36,22,30) to which it is connected.

4. A trim panel as claimed in any preceding Claim in which the frangible portion (26,34) has a recess (24,32) therein to act as a failure initiator.

5. A trim panel as claimed in any of claims 1 to 4 in which the mounting member,(10) and the fixing means (18) are formed as an integral part of the trim panel (T).

6. A trim panel as claimed in Claim 1 in which each mounting member (50) is formed by a lower cylindrical portion (52) and an upper cylindrical portion (51) connected by an annular flange (53) forming said frangible portion.

7. A trim panel as claimed in Claim 6 in which the annular flange (53) is thinner than the adjoining upper and lower cylindrical portions (51 and 52) that it connects.

8. A trim panel as claimed in Claim 6 or in Claim 7 in which the annular flange (53) has a circumferentially extending recess (55) therein.

9. A trim panel as claimed in any of Claims 6 to 8 in which the annular flange (53) forms a discontinuity between said upper and lower cylindrical portions (51,52).

10. A trim panel as claimed in any preceding claim in which one or more blocks of resilient foam (F) is interposed between the plate like portion (2) of the trim panel (T, T2) and the structural part (B) of the vehicle body so as to absorb energy during failure of the mounting members (10,50).

## Patentansprüche

1. Kunststoffverkleidungsteil zur Befestigung an einem Teil der Innenstruktur eines Fahrzeugs, wobei das Verkleidungsteil (T) einen plattenförmigen Teil (2) zur Überlagerung des zu bedeckenden Strukturteils (B) und mehrere voneinander beabstandete Verkleidungsbefestigungen zur Befestigung des plattenförmigen Teils (2) an dem Strukturteil (B) des Fahrzeugs enthält, wobei jede der Verkleidungsbefestigungen ein oder mehrere Halterungsglieder (10, 50) aus Kunststoff und ein Befestigungsmittel (18, 57) zur Zusammenwirkung, im Gebrauch, mit einem dem Strukturteil (B) des Fahrzeugs zugeordneten Halterungsmittel umfaßt, dadurch gekennzeichnet, daß jedes der Halterungsglieder (10, 50) einen zerbrechbaren Teil (24, 34, 53) darin aufweist, der so ausgeführt ist, daß er unter einer vorbestimmten ausgeübten Schlagkraft (I) abschert und dadurch Energie von der Schlagkraft (I) aufnimmt.

2. Verkleidungsteil nach Anspruch 1, bei dem jedes der Halterungsglieder (10, 50) zwei Schenkelteile (12, 14) aufweist, die jeweils einen oberen Schenkelteil (28, 36) und einen unteren Schenkelteil (24, 30) aufweisen, die durch einen zerbrechbaren Teil (24, 34) so miteinander verbunden sind, daß zwischen ihnen eine Diskontinuität gebildet wird.

3. Verkleidungsteil nach Anspruch 2, bei dem jeder zerbrechbare Teil (24, 34) dünner ist als der daran angrenzende obere und untere Schenkelteil (28, 36, 22, 30), mit dem er verbunden ist.

4. Verkleidungsteil nach einem der vorhergehenden Ansprüche, bei dem in dem zerbrechbaren Teil (26, 34) eine Aussparung (24, 32) ausgebildet ist, die als Versagenseinleiter dient.

5. Verkleidungsteil nach einem der Ansprüche 1 bis 4, bei dem das Halterungsglied (10) und das Befestigungsmittel (18) als integrales Teil des Verkleidungsteils (T) gebildet sind.

6. Verkleidungsteil nach Anspruch 1, bei dem jedes Halterungsglied (50) durch einen unteren zylindrischen Teil (52) und einen oberen zylindrischen Teil (51) gebildet wird, die durch einen den zerbrechbaren Teil bildenden, ringförmigen Flansch (53) miteinander verbunden sind.

7. Verkleidungsteil nach Anspruch 6, bei dem der ringförmige Flansch (53) dünner ist als der daran angrenzende obere und untere zylindrische Teil (51 und 52), die er miteinander verbindet.

8. Verkleidungsteil nach Anspruch 6 oder 7, bei dem in dem ringförmigen Flansch (53) eine sich um den Umfang erstreckende Aussparung (55) ausgebildet ist.

9. Verkleidungsteil nach einem der Ansprüche 6 bis 8, bei dem der ringförmige Flansch (53) zwischen dem oberen und unteren zylindrischen Teil (51, 52) eine Diskontinuität bildet.

10. Verkleidungsteil nach einem der vorhergehenden Ansprüche, bei dem zwischen dem plattenförmigen Teil (2) des Verkleidungsteils (T, T2) und dem Strukturteil (B) der Fahrzeugkarosserie ein oder mehrere Blöcke aus elastischem Schaumstoff (F) angeordnet sind, um bei einem Versagen der Halterungsglieder (10, 50) Energie aufzunehmen.

## Revendications

1. Panneau de garnissage en plastique destiné à être attaché à une partie de la structure intérieure d'un véhicule, le panneau de garnissage (T) comportant une portion de type plaque (2) destinée à recouvrir la partie structurelle (B) à couvrir et un certain nombre de fixations de garnissage espacées pour attacher la portion de type plaque (2) à la partie structurelle (B) du véhicule, chacune des fixations de garnissage se composant d'un ou plusieurs organes de support en plastique (10, 50) et d'un moyen de fixation (18, 57) pour coopérer, en fonctionnement, avec un moyen de support associé à la partie structurelle (B) du véhicule, caractérisé en ce que chacun desdits organes de support (10, 50) a une portion cassante (24, 34, 53) adaptée pour se cisailler sous l'effet de l'application d'une force d'impact (I) prédéterminée, pour ainsi absorber l'énergie de la force d'impact (I).

2. Panneau de garnissage selon la revendication 1, dans lequel chacun des organes de support (10, 50) a deux portions de patte (12, 14) ayant chacune une portion de patte supérieure (28, 36) et une portion de patte inférieure (24, 30) connectées ensemble par la portion cassante (24, 34) de manière à former une discontinuité entre elles.

3. Panneau de garnissage selon la revendication 2, dans lequel chaque portion cassante (24, 34) est plus mince que les portions de patte supérieure et inférieure adjacentes (28, 36, 22, 30) auxquelles elle est connectée.

4. Panneau de garnissage selon l'une quelconque des revendications précédentes, dans lequel la portion cassante (26, 34) comprend un retrait (24, 32) servant d'amorceur de défaillance.

5. Panneau de garnissage selon l'une quelconque des revendications 1 à 4, dans lequel l'organe de support (10) et le moyen de fixation (18) sont formés en tant que partie intégrante du panneau de garnissage (T).

6. Panneau de garnissage selon la revendication 1, dans lequel chaque organe de support (50) est formé par une portion cylindrique inférieure (52) et une portion cylindrique supérieure (51) connectées par une bride annulaire (53) formant ladite portion cassante.

7. Panneau de garnissage selon la revendication 6, dans lequel la bride annulaire (53) est plus mince que les portions cylindriques supérieure et inférieure adjacentes (51 et 52) qu'elle connecte.

8. Panneau de garnissage selon la revendication 6 ou la revendication 7, dans lequel la bride annulaire (53) comprend un retrait (55) s'étendant circonférentiellement.

9. Panneau de garnissage selon l'une quelconque des revendications 6 à 8, dans lequel la bride annulaire (53) forme une discontinuité entre lesdites portions cylindriques supérieure et inférieure (51,52).

10. Panneau de garnissage selon l'une quelconque des revendications précédentes, dans lequel un ou plusieurs blocs de mousse élastique (F) sont interposés entre la portion de type plaque (2) du panneau de garnissage (T, T2) et la partie structurelle (B) de la carrosserie du véhicule, de manière à absorber l'énergie au cours de la défaillance des organes de support (10, 50).
